# EUROPÄISCHE PATENTANMELDUNG

(11) **EP 0 795 350 A1**
(43) Veröffentlichungstag der Anmeldung: **17.09.1997**
(21) Anmeldenummer: 97104354.2
(22) Anmeldetag: 14.03.1997
(51) Int. Cl.: B01D 53/34

(54) **Verfahren zur Reinigung SO2-haltiger Abgase**

(30) Priorität: 14.03.1996 DE 19609966
(71) Anmelder: Intensiv-Filter GmbH & Co KG, D-42555 Velbert - Langenberg (DE)
(72) Erfinder: Werner, Udo, Prof. Dr.-Ing., 45657 Recklinghausen (DE); Naffin, Burkhard, Dipl.-Ing., 59368 Werne (DE)
(74) Vertreter: Stenger, Watzke & Ring Patentanwälte

(57) **Zusammenfassung**

Bei einem Verfahren zur Reinigung SO₂-haltiger Abgase unter Zugabe einer alkalischen Verbindung und vorzugsweise Calciumhydroxid in den abzuscheidenden Gasstrom wird ein deutlich verbesserter Abscheidegrad erreicht, indem dem Gasstrom vor Erreichen eines in dem Gasstrom angeordneten Filters verflüssigbare Stoffe zugegeben werden, die zum Zeitpunkt ihrer Zugabe von fester und vorzugsweise pulvriger Konsistenz sind, die Eigenschaft aufweisen, Feuchtigkeit aus dem Gasstrom aufzunehmen, und sich infolge der Aufnahme von Feuchtigkeit aus dem Gasstrom zumindest teilweise selbst verflüssigen.

## Beschreibung

Die Erfindung betrifft ein Verfahren zur Reinigung SO₂-haltiger Abgase unter Zugabe einer alkalischen Verbindung, vorzugsweise Calciumhydroxid, in den abzuscheidenden Gasstrom vor Erreichen eines in dem Gasstrom angeordneten Filters.

Bei der Verbrennung fossiler Energieträger sowie der Verbrennung von Müll, Klärschlamm oder Produktionsrückständen verschiedener Art sowie ferner bei Prozessen der keramischen Industrie werden Schadstoffe freigesetzt, zu denen z. B. SO₂, HCl, HF gehören. Für die Abscheidung dieser Schadstoffe werden Verfahren eingesetzt, die sich in trockene bzw. halbtrockene Abgasreinigungsverfahren auf der einen Seite und nasse Abgasreinigungsverfahren auf der anderen Seite unterteilen lassen.

Bei der nassen Abgasreinigung wird der Gasstrom nach vorheriger Staubabscheidung gekühlt und in einem Wäscher, dessen Waschwasser basische Additive enthält, bei Temperaturen zwischen 50 und 70°C gereinigt. Von Nachteil ist hierbei, daß die mit Wasserdampf gesättigten Abgase anschließend wieder aufgeheizt werden müssen und daß bei diesem Verfahren anorganisch belastete und aufgewärmte Abwässer anfallen.

Bei der halbtrockenen Abgasreinigung werden alkalische Suspensionen in den Abgasstrom eingedüst. Während der anschließenden Verdampfung der Flüssigphase, bei der es sich in der Regel um Wasser handelt, reagieren die sauren Schadgase mit den alkalischen Suspensionspartikeln. Das entstehende trockene Produkt wird in einem Staubabscheider zurückgehalten. Bei letzterem macht man sich insbesondere bei Verwendung eines filternden Abscheidertyps die merkliche Nachreaktion in dem sich aufbauenden Filterkuchen zunutze.

Bei der trockenen Abgasreinigung werden basische Additive wie z. B. Calciumhydroxid und Kalkstein in fester Form in den Feuerraum bzw. in den Abgasstrom geblasen und anschließend abgeschieden. Häufig erfolgt noch eine Konditionierung der Abgase durch Quentschung oder durch Einspeisung von Wasserdampf. In der WO 92/06772 ist ein solches trockenes Verfahren beschrieben, bei dem durch die Einstellung hoher relativer Feuchten infolge einer Temperaturabsenkung des Abgasstroms Verbesserungen des Abscheidegrades möglich sind. Gleichwohl werden mit einem solchen Verfahren bei einer Temperatur von 70°C und einem stöchiometrischen Verhältnis von basischem Additiv zu Schadgas von zwei nur Abscheidegrade von ca. 60 % erreicht.

Zur Verbesserung der unbefriedigenden Abscheidegrade ist in der DE 37 16 566 A1 beschrieben, das Calciumhydroxid zu modifizieren, indem während des Löschens des gebrannten Kalks dem Löschwasser Stoffe zugesetzt werden, welche die Reaktionsfähigkeit des beim Löschprozeß entstehenden Calciumhydroxids steigern sollen. Als hierfür in Betracht zu ziehende Zusätze sind Calciumchlorid und Magnesiumchlorid genannt. In der DE 37 16 566 A1 wird angenommen, daß wegen des Bestrebens des Calciumchlorids, Wasser aufzunehmen, kein Wasser in das Korninnere des Calciumhydroxids gelange, was letztlich zu einer Steigerung von dessen Reaktionsfähigkeit führe.

Versuche allerdings konnten die in dieser Druckschrift aufgestellte Theorie nicht bestätigen. Vielmehr hat sich herausgestellt, daß gerade die Anwesenheit von Wasser auf den Feststoffoberflächen, etwa in Form von Wasserdampf-Sorptionsschichten, zu einer erhöhten Umsetzung des Calciumhydroxids mit Schwefelfdioxid führt. Nachteilig bei den in der DE 37 16 566 A1 beschriebenen, modifizierten Partikeln aus Calciumhydroxid ist der mit deren Herstellung verbundene hohe Aufwand, weshalb ein damit durchgeführtes Verfahren zur Abgasreinigung zu hohen Betriebskosten führt und eine geringe Flexibilität in bezug auf Schwankungen der Abgaszusammensetzung aufweist.

In der DE 39 15 934 A1 ist ein Verfahren zur Abgasreinigung beschrieben, bei dem dem reaktionsfähigen Calciumhydroxid oberflächenaktive Stoffe hinzugefügt werden. Diese Stoffe zeichnen sich durch eine bezogen auf ihr Gewicht besonders große Oberfläche aus. Als Beispiel wird auf Aktivkohle mit 700 m²/g aktiver Oberfläche hingewiesen. Die Zugabe der oberflächenaktiven Stoffe kann vor, beim oder nach dem Löschen des Calciumhydroxids erfolgen. Ziel der so vorgenommenen Modifizierung ist die Verbesserung der Abscheidung von Schwermetallen und Dioxinen/Furanen aus dem Rauchgas. Als besonders vorteilhaft wird herausgestellt, daß bereits im Temperaturbereich oberhalb 170°C ausreichende Abscheideleistungen erreicht werden und deshalb auf eine Temperaturabsenkung des Abgasstromes verzichtet werden kann.

Ein ähnliches Verfahren, bei dem ebenfalls eine Modifizierung des Calciumhydroxids vorgenommen wird, ist aus der DE 40 33 417 A1 bekannt. Eingesetzt werden hierbei Zuschlagstoffe mit hochporöser Struktur und entsprechend vergrößerter reaktiver Oberfläche. Ebenso wie bei dem Verfahren gemäß DE 39 15 934 A1 wird angestrebt, durch die Zugabe von Stoffen mit großer spezifischer Oberfläche insbesondere Schwermetalle und organische Schadstoffe abzuscheiden. Für ein Verfahren zur SO₂-Abscheidung ist jedoch der Einsatz dieser hochreaktiven Substanzen nicht wirtschaftlich, da die optimalen Temperaturen bei den beschriebenen Verfahren weit über 150°C liegen.

Der Erfindung liegt die **Aufgabe** zugrunde, ein Verfahren zur Reinigung SO₂-haltiger Abgase mit deutlich verbessertem Abscheidegrad zu entwickeln.

Die **Lösung** ist bei einem Verfahren der eingangs genannten Art dadurch gekennzeichnet, daß dem Gasstrom vor Erreichen des Filters verflüssigbare Stoffe zugegeben werden, die
- zum Zeitpunkt ihrer Zugabe von fester und vorzugsweise pulvriger Konsistenz sind,
- die Eigenschaft aufweisen, Feuchtigkeit aus dem Gasstrom aufzunehmen,
- sich infolge der Aufnahme von Feuchtigkeit aus dem Gasstrom zumindest teilweise selbst verflüssigen.

Kerngedanke der Erfindung ist es, der bei der Abgasreinigung eingesetzten alkalischen Verbindung Stoffe wie z. B. Calciumchlorid zuzusetzen, deren Eigenschaft darin besteht, Wasser in Form von Feuchtigkeit in hohem Maße aus der umgebenden Atmosphäre aufzunehmen und dabei selbst in Lösung zu gehen. Erst hierdurch wird der alkalischen Verbindung, bei der es sich vorzugsweise um Calciumhydroxid handelt, die für die Erreichung des gewünschten hohen Abscheidegrades erforderliche Feuchte zur Verfügung gestellt. Die benötigte Anfangsfeuchte ist bereits in dem zugeführten Abgasstrom enthalten, indem dieser zuvor auf geeignete Temperaturen herabgekühlt wird. Die festen Abgasbestandteile werden dann im nachfolgenden auf dem Filter zurückgehalten. Die zuvor hinzugegebenen verflüssigbaren Stoffe nehmen die Feuchte des umgebenden Abgasstromes auf und verflüssigen hierdurch zumindest teilweise selbst. Bei Einhaltung dieser Bedingungen stellt sich in der Filterschicht eine Mischung aus basischem Additiv und dem zusätzlichen verflüssigbaren Stoff ein. Es kommt zu einer Erhöhung der spezifischen Wasseraufnahmekapazität und damit einer Erhöhung des Feuchtegehaltes der Filterschicht, wodurch auf und in den Partikeln der alkalischen Verbindung eine hohe lokale Feuchte realisiert wird. Bei Einhaltung dieser Bedingungen lassen sich infolge der dann auf dem Gewebefilter verstärkt stattfindenden Nachreaktionen deutlich verbesserte Abscheidegrade erzielen. Als alkalische Verbindung kommen solche in Betracht, die in Wasser alkalische Lösungen bilden, wie CaO, Ca(OH)₂, CaCO₃ und Gemische der Voranstehenden. Eine bevorzugte Verbindung ist Ca(OH)₂, das beispielsweise in technisch reiner Form als sog. Löschkalk oder Kalkhydrat eingesetzt werden kann. Überraschend ist, daß es zu diesem Zweck nicht erforderlich ist, nach dem Vorschlag gemäß der DE 37 16 566 A1 modifizierte Calciumhydroxide einzusetzen, bei denen in die Matrix des Calciumhydroxids (bzw. Kalkhydrats) deren Reaktionsfähigkeit steigernde Stoffe eingebaut werden. Vielmehr reicht es erfindungsgemäß bereits aus, in den zu reinigenden Abgasstrom das chemisch unveränderte Calciumhydroxid und außerdem verflüssigbare Stoffe einzubringen, um bei geeigneten Temperaturbedingungen den SO₂-Abscheidegrad wesentlich zu erhöhen.

Zusätzlich zur Zugabe der verflüssigbaren Stoffe kann der Rauchgasstrom abgekühlt werden. Gemäß einer Weiterbildung des Verfahrens wird zu diesem Zweck vorgeschlagen, daß die Zugabe der verflüssigbaren Stoffe im Temperaturbereich zwischen 60 und 180°C, vorzugsweise im Bereich von 70 bis 150°C, noch bevorzugter im Temperaturbereich von 80 bis 120°C erfolgt. Die Abkühlung des Gasstroms kann durch Quentschung und gleichzeitige Einstellung des gewünschten Wasserdampfgehaltes oder durch anderweitige Kühlung oder Konditionierung des Abgases mittels Wasserdampf erfolgen. Die erhöhte Feuchte wird ausgenutzt, indem durch Bereitstellung einer einfachen und leicht herzustellenden Mischung aus Calciumhydroxid und verflüssigbaren Zusatzstoffen die Wasserdampf-Sorptionseigenschaften des sich an dem Filter aufbauenden Filterkuchens verbessert werden. Die Zugabe kann zum Zwecke einer höheren Flexibilität und Wirtschaftlichkeit auch getrennt erfolgen. Die unbefriedigende Umsetzung von SO₂ wird also durch die Erhöhung der lokalen Feuchte in der Filterschicht auf und in den Partikeln des Calciumhydroxids gesteigert. Die in Anwesenheit von Wasser ansteigende Löslichkeit von SO₂ mit fallender Temperatur und die Veränderung des Charakters der Abscheidereaktion von einer Gas-Feststoff-Reaktion zu einer Flüssigphasenreaktion hin verbessern den Umsatz des als alkalische Verbindung verwendeten Calciumhydroxids. Mit dem Einsatz oberflächenaktiver Stoffe lassen sich diese Wirkungen nicht erzielen, da oberflächenaktive Stoffe nicht in der Lage sind, der alkalischen Verbindung die erforderliche Feuchte zur Verfügung zu stellen. Gegenüber den bekannten oberflächenaktiven Stoffen weisen die erfindungsgemäßen verflüssigbaren Stoffe nur eine geringe spezifische Oberfläche in der Größenordnung einiger Quadratmeter pro Gramm auf.

Als verflüssigbarer Stoff hat sich vor allem Calciumchlorid als geeignet herausgestellt. Ähnlich gute Ergebnisse werden mit Magnesiumchlorid erzielt. In Betracht zu ziehen sind ferner Lithiumbromid, Zinkbromid, Lithiumchlorid, Kaliumcarbonat, Magnesiumnitrat, Natriumbromid, Kaliumiodid. Die einzusetzenden Stoffe müssen prinzipiell die Eigenschaft aufweisen, der Umgebungsluft Feuchte zu entziehen und sich dabei zumindest teilweise verflüssigen zu können. Diese Stoffe oder auch Kombinationen davon lassen sich ohne weiteres auch mit dem Calciumhydroxid vermischen, bevor diese Mischung in den zu reinigenden Abgasstrom eingeleitet wird.

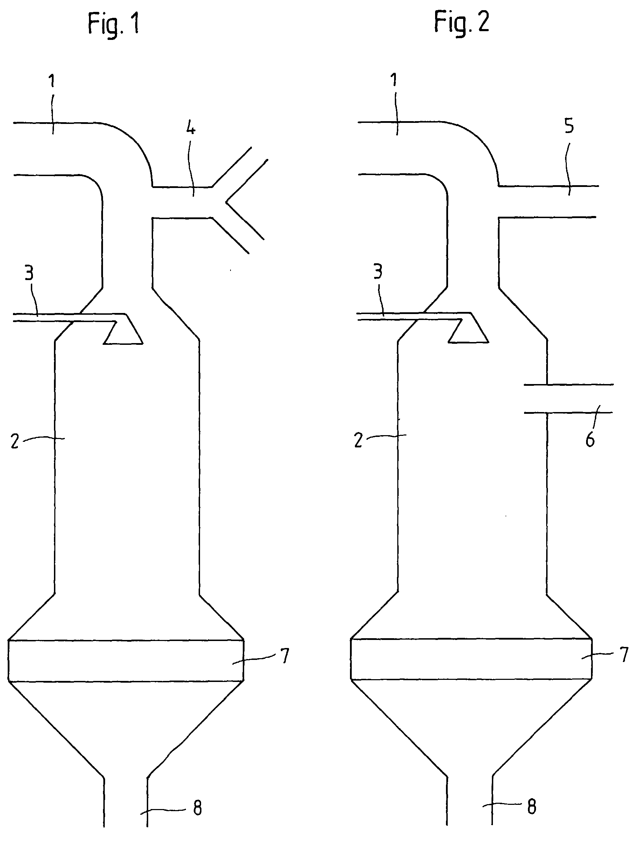

Das erfindungsgemäße Verfahren wird nachfolgend anhand eines Ausführungsbeispieles erläutert. Die
Figuren 1 und 2 zeigen jeweils den prinzipiellen Aufbau einer Abgasreinigungsanlage zur Durchführung des Verfahrens.

Ein Gasvolumenstrom 1, welcher bereits in seiner Temperatur abgesenkt sein kann, gelangt in ein Reaktionsrohr, in dessen oberem Teil Wasserdampf 3 zum Zwecke der Konditionierung des Gasstroms eingeblasen wird. Bereits vor der Wasserdampfeindüsung gelangt über einen Stutzen 4 Ca(OH)₂ in den Gasstrom. Bei der Ausführungsvariante gemäß Fig. 2 wird das Ca(OH)₂ vor der Einleitung in den Gasstrom 1 mit CaCl₂ vermischt, und diese Mischung dann gemeinsam in dem Gasstrom verteilt. Bei der Ausführungsform gemäß Fig. 2 hingegen erfolgt eine getrennte Zugabe des Ca(OH)₂ sowie des CaCl₂ über getrennte Zugabestutzen 5,6.

Der gesamte Gasvolumenstrom wird am Ende des Reaktionsrohrs 2 auf ein Gewebefilter 7 geleitet, auf dem sich mit der Zeit ein Filterkuchen aufbaut. Hinter dem Gewebefilter 7 verläßt der Reingasstrom 8 die Anlage.

Ein Verfahrensbeispiel wird nachfolgend angegeben:

In der voranstehend beschriebenen Anlage konnte bei einer Gastemperatur von 70°C und einer SO₂-Konzentration in dem Rohgas von 750 ppm die SO₂-Abscheidung ausgehend von einem Wert von 5 % bei trockener Versuchsführung und einer relativen Feuchte von 0 bis auf Werte von 40 % bei einem Wasserdampfgehalt von 25 Vol.-% bei einer relativen Feuchte von 0,8 gesteigert werden. Durch Verwendung eines Gemisches aus Ca(OH)₂ mit 7 Gew.-% CaCl₂ konnte bei einer Feuchte von 20 Vol.-% und relativer Feuchte von 0,6 ein SO₂-Abscheidegrad von über 80 % bei einem stöchiometrischen Verhältnis des Wertes 2 von basischem Adsorbens und saurem Schadgas gemessen werden.

## Patentansprüche

1. Verfahren zur Reinigung SO₂-haltiger Abgase unter Zugabe einer alkalischen Verbindung, vorzugsweise Calciumhydroxid, in den abzuscheidenden Gasstrom vor Erreichen eines in dem Gasstrom angeordneten Filters,
**dadurch gekennzeichnet,**
daß dem Gasstrom vor Erreichen des Filters verflüssigbare Stoffe zugegeben werden, die
- zum Zeitpunkt ihrer Zugabe von fester und vorzugsweise pulvriger Konsistenz sind,
- die Eigenschaft aufweisen, Feuchtigkeit aus dem Gasstrom aufzunehmen,
- sich infolge der Aufnahme von Feuchtigkeit aus dem Gasstrom zumindest teilweise selbst verflüssigen.

2. Verfahren nach Anspruch 1, dadurch gekennzeichnet, daß die alkalische Verbindung und die verflüssigbaren Stoffe dem Abgasstrom getrennt zugegeben werden.

3. Verfahren nach Anspruch 2, dadurch gekennzeichnet, daß die verflüssigbaren Stoffe in den mit der alkalischen Verbindung beladenen Abgasstrom eingedüst werden.

4. Verfahren nach Anspruch 1, dadurch gekennzeichnet, daß die alkalische Verbindung und die verflüssigbaren Stoffe dem Abgasstrom als Mischung zugegeben werden.

5. Verfahren nach einem der vorangehenden Ansprüche, dadurch gekennzeichnet, daß die Zugabe der verflüssigbaren Stoffe im Temperaturbereich zwischen 60 und 180°C, vorzugsweise im Bereich von 70 bis 150°C, noch bevorzugter im Temperaturbereich von 80 bis 120°C erfolgt.

6. Verfahren nach einem der vorangehenden Ansprüche, dadurch gekennzeichnet, daß als verflüssigbare Stoffe die Alkali- und Erdalkalisalze der Halogensäuren oder Mischungen davon zugegeben werden.

7. Verfahren nach einem der vorangehenden Ansprüche, dadurch gekennzeichnet, daß als verflüssigbarer Stoff Calciumchlorid zugegeben wird.

8. Verfahren nach einem der vorangehenden Ansprüche, dadurch gekennzeichnet, daß als verflüssigbarer Stoff Magnesiumchlorid zugegeben wird.

9. Verfahren nach Anspruch 1, dadurch gekennzeichnet, daß als verflüssigbarer Stoff Calciumchlorid mit 5 bis 15 Gew.-% bezogen auf die alkalische Verbindung Calciumhydroxid zugegeben wird.
